# EUROPÄISCHE PATENTANMELDUNG

(11) **EP 2 128 353 A1**
(43) Veröffentlichungstag der Anmeldung: **02.12.2009**
(21) Anmeldenummer: 09160104.7
(22) Anmeldetag: 13.05.2009
(51) Int. Cl.: E04B 5/48, E04C 2/52, F24D 3/14, E04B 5/23

(54) **Fertigbauteil mit Holzbalken und integrierten Heizungsrohren**

(30) Priorität: 28.05.2008 DE 202008007139 U
(71) Anmelder: Schwörer Haus KG, 72531 Hohenstein (DE)
(72) Erfinder: Schwörer, Johannes, 72531 Hohenstein-Oberstetten (DE)
(74) Vertreter: Schaumburg, Thoenes, Thurn, Landskron, Eckert

(57) **Zusammenfassung**

Die Erfindung betrifft ein Fertigbauteil (10), bei dem eine untere Platte (12) und eine obere Platte (14) im Abstand voneinander gehalten sind. Es sind durch den Abstand der Platten (12, 14) Kammern (28) gebildet, die mit einem Dämmmaterial (30) ausgefüllt sind. Die obere Platte (14) umfasst eine Betonplatte (24), in die mindestens ein Heizungsrohr (26) einer Fußbodenheizung eingebettet ist. Die untere Platte (12) und die obere Platte (14) sind durch Holzbalken (22) im Abstand voneinander gehalten.

## Beschreibung

Die Erfindung betrifft ein Fertigbauteil, bei dem eine untere Platte und eine obere Platte im Abstand voneinander gehalten sind. Die durch die beiden Platten gebildeten Kammern sind mit Dämmmaterial ausgefüllt. In die obere Platte sind Heizungsrohre eingebettet.

Ein solches Fertigbauteil ist bereits aus der EP-A- 1422356 derselben Anmelderin bekannt. Der Vorteil eines solchen Fertigbauteils im Vergleich zu anderen handelsüblichen Fertigbauteilen ist die wesentlich höhere Wirtschaftlichkeit, da kostenintensive Arbeitsschritte wie zum Beispiel das manuelle Aufbringen des Estrichs und das Verlegen der Heizungsrohre in diesem auf der Baustelle entfallen.

Das Fertigbauteil nach EP-A-1422356 umfasst eine plattenförmige Konstruktion aus zwei Stahlbetonscheiben, die durch Gitterträger aus Stahl, deren Enden in die Betonscheiben einbetoniert sind, auf Abstand gehalten werden. Auf der Bewehrung der oberen Betonscheibe sind die Heizungsrohre angeordnet. Diese Konstruktion weist bei bestimmten Anwendungen Nachteile auf. Zum einen ist das Fertigbauteil relativ schwer, was einerseits den Transport von der Fabrik zur Baustelle erschwert und dadurch die Wirtschaftlichkeit negativ beeinflusst, und andererseits die Handhabung auf der Baustelle erschwert. Zum anderen sind die Dämmeigenschaften des Bauteils in Verbindung mit den Stahlgitterträgern nachteilig, da die dadurch gebildeten Wärmebrücken zu unnötig hohen Heizkosten führen können.

Es ist Aufgabe der Erfindung, ein Fertigbauteil anzugeben, welches eine hohe Wirtschaftlichkeit und eine einfache Handhabung gewährleistet.
Diese Aufgabe wird durch die Kombination der Merkmale des Anspruchs 1 gelöst. Vorteilhafte Weiterbildungen sind Gegenstand der Unteransprüche.

Gemäß der Erfindung umfasst die obere Platte eine Betonplatte, in die mindestens ein Heizungsrohr eingebettet ist. Kostenintensive vorbereitende Arbeitsschritte auf der Baustelle wie zum Beispiel das Auftragen eines Estrichs und das manuelle Verlegen von Heizungsrohren entfallen. Die obere und die untere Platte sind durch mehrere Holzbalken im Abstand voneinander gehalten. Diese großflächige Verwendung von Holzbalken bringt zwei wesentliche Vorteile mit sich: Zum einen wird hierdurch eine erhebliche Gewichtsreduktion erreicht, was einerseits die Handhabung erleichtert und andererseits wirtschaftliche Vorteile beim Transport bewirkt. Zum anderen weisen die Holzbalken gute Dämmeigenschaften auf. Die Holzbalken bilden im Gegensatz zu Stahlgitterträgern keine Wärmebrücken, an denen die Wärme schneller nach außen transportiert wird als an anderen Stellen des Bauteils. Somit werden Energiekosten eingespart.
Vorteilhafterweise ist unterhalb der Betonplatte eine weitere Platte aus Holz oder Spanmaterial, die zum Abschluss und zur Verteilung der wirkenden Kräfte dient, angeordnet. Die untere Platte umfasst eine Beplankung, die aus mehreren parallel angeordneten Brettern bebildet ist, und eine oberhalb der Beplankung vorgesehene Lattung, die durch eine Vielzahl parallel angeordneter Latten gebildet ist. Diese großflächige Verwendung von Holzelementen führt zu einer weiteren Verbesserung des Dämmverhaltens und einer Reduktion des Gewichts des Fertigbauteils.

Alternativ kann die untere Platte auch zwei Beplankungen umfassen, wobei die Bretter der oberen Beplankung quer zu den Brettern der unteren Beplankung angeordnet sind.

Ein noch besseres Dämmverhalten wird durch das Einbringen von Dämmmaterial in die Kammern, die aus der unteren Platte, der oberen Platte und den Holzbalken bebildet sind, erreicht. Hierdurch werden Wärmeverluste verringert und die Heizkosten reduziert. Als Dämmmaterial kommen beispielsweise Polysterol-Kügelchen, Zellulose-Flocken und/oder Mineralwolle zum Einsatz. Alternativ wird auch PU-Schaum eingebracht. Dieser wird flüssig in die Kammern gefüllt. Nach dem Aushärten trägt er bis einem gewissen Grad zur Stabilität des Fertigbauteils bei.

Die Oberfläche der Betonplatte ist vorteilhafterweise so ausgebildet, dass auf ihr direkt ein Bodenbelag verlegbar ist. Hierdurch werden kostenintensive Arbeitsschritte, wie zum Beispiel das manuelle Verlegen eines Estrichs, eingespart. Als Bodenbelag können beispielsweise Parkett, Teppichboden, Fliesen oder Kunststoffböden vorgesehen sein.

Das beschriebene Bauteil kann sowohl als Bodenplatte, als auch als Kellerdecke sowie als Geschossdecke eingesetzt werden.

Ein Ausführungsbeispiel der Erfindung wird im Folgenden anhand der Zeichnung erläutert. Dabei zeigt

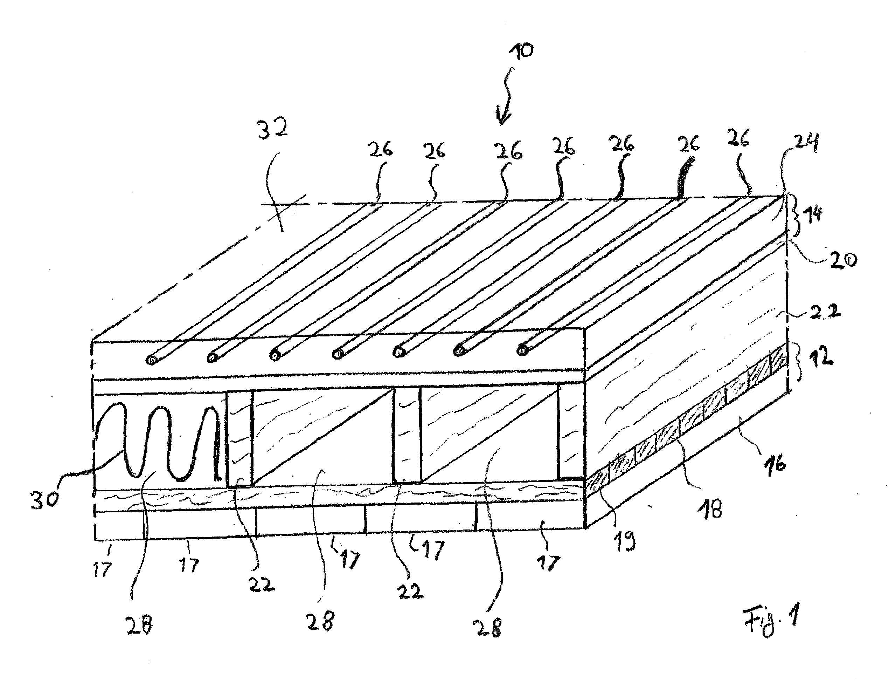

Fig.1 einen schematischen Querschnitt durch ein perspektivisch dargestelltes Fertigbauteil.

Figur 1 zeigt einen perspektivischen Querschnitt durch ein Fertigbauteil. Das Fertigbauteil 10 kann sowohl als Bodenplatte, Kellerdecke als auch Geschoßdecke zum Einsatz kommen. Das Fertigbauteil 10 umfasst eine untere Platte 12 und eine obere ebenfalls Platte 14, wobei die obere Platte 14 in der Regel dicker ausgeführt ist als die untere Platte 12.

Die untere Platte 12 setzt sich aus einer Beplankung 16, die aus mehreren parallel angeordneten Brettern 17 besteht und einer oberseitig auf dieser aufgebrachten Lattung 18 zusammen. Die Lattung 18 wird durch eine Vielzahl parallel angeordneter Latten 19 gebildet. Alternativ kann statt der Lattung 18 auch eine weitere Beplankung verwendet werden, deren Bretter in die gleiche Richtung wie die dargestellten Latten 19 verlaufen.

Die obere Platte 14 wird durch eine Platte 20, die dem Abschluss und der Verteilung der wirkenden Kräfte dient, und einer auf dieser aufgebrachten Betonplatte 24 gebildet. In der Betonplatte 26 ist ein mäanderförmiges Heizungsrohr eingebettet.

Die untere Platte 14 und die obere Platte 16 werden durch Holzbalken 22 im Abstand voneinander gehalten. Die Holzbalken 22 sind auf der Lattung 18 und der Platte 20 befestigt.

In den durch die Holzbalken 22, der Lattung 18 und der Abschluss- und Verteilerplatte 20 gebildeten Kammern 28 ist ein Dämmmaterial 30 eingefüllt. Hier kann beispielsweise Polyurethan(PU)-Ortschaum verwendet werden. Nachdem der flüssig eingebrachte PU-Schaum ausgehärtet ist, trägt er bis zu einem gewissen Grad zur Stabilität des Fertigbauteils 10 bei. Alternativ können als Dämmmaterial auch Polysterol-Kügelchen, Zellulose-Flocken und/oder Mineralwolle verwendet werden.

Die Oberfläche 32 der Betonplatte 24 ist ausreichend glatt gestaltet. Auf dem so gebildeten Betonspiegel kann direkt ein Bodenbelage verlegt werden. Vorbereitende Arbeitsschritte auf der Baustelle wie zum Beispiel das Auftragen eines Estrichs entfallen. Als Bodenbelag kommen beispielsweise Parkett, Teppichboden, Fliesen oder Kunststoffböden in Betracht.

## Patentansprüche

1. Fertigbauteil (10),
bei dem eine untere Platte (12) und eine obere Platte (14) im Abstand voneinander gehalten sind,
und bei dem Kammern (28) durch die Platten (12, 14) gebildet sind, die mit einem Dämmmaterial (30) ausgefüllt sind,
wobei die obere Platte (14) eine Betonplatte (24) umfasst, in die mindestens ein Heizungsrohr (26) einer Fußbodenheizung eingebettet ist,
und die untere Platte (12) und die obere Platte (14) durch Holzbalken (22) im Abstand voneinander gehalten sind.

2. Fertigbauteil nach Anspruch 1, **dadurch gekennzeichnet, dass** die untere Platte (12) eine Beplankung (16) enthält, die mehrere parallel angeordnete Bretter (17) umfasst.

3. Fertigbauteil nach Anspruch 2, **dadurch gekennzeichnet, dass** oberhalb der Beplankung eine Lattung (18) vorgesehen ist, die durch eine Vielzahl parallel angeordneter Latten (19) gebildet ist.

4. Fertigbauteil nach Anspruch 2, **dadurch gekennzeichnet, dass** die untere Platte (12) zusätzlich zur genannten Beplankung (16) eine weitere Beplankung umfasst, die mehrere parallel angeordnete Bretter enthält, die quer zu den Brettern der genannten Beplankung (16) angeordnet sind.

5. Fertigbauteil nach einem der Ansprüche 1 bis 4, **dadurch gekennzeichnet, dass** die obere Platte (14) eine unterhalb der Betonplatte (24) angebrachte Platte (20) umfasst, vorzugsweise aus Holz oder Spanmaterial.

6. Fertigbauteil nach einem der vorhergehenden Ansprüche, **dadurch gekennzeichnet, dass** als Dämmmaterial (30) PU-Schaum vorgesehen ist.

7. Fertigbauteil nach einem der vorhergehenden Ansprüche, **dadurch gekennzeichnet, dass** als Dämmmaterial (30) Polysterol-Kügelchen, Zellulose-Flocken und/oder Mineralwolle vorgesehen ist.

8. Fertigbauteil nach einem der vorhergehenden Ansprüche, **dadurch gekennzeichnet, dass** die Oberfläche (32) der Betonplatte (24) so ausgebildet ist, dass auf ihr direkt ein Bodenbelag verlegbar ist.

9. Fertigbauteil nach Anspruch 7, **dadurch gekennzeichnet, dass** als Bodenbelag Parkett, Teppichboden, Fliesen oder Kunststoffböden vorgesehen ist.

10. Fertigbauteil nach einem der vorhergehenden Ansprüche, **dadurch gekennzeichnet, dass** es als Bodenplatte verwendet wird.

11. Fertigbauteil nach einem der vorhergehenden Ansprüche, **dadurch gekennzeichnet, dass** es als Kellerdecke verwendet wird.

12. Fertigbauteil nach einem der vorhergehenden Ansprüche, **dadurch gekennzeichnet, dass** es als Geschossdecke verwendet wird.
